Europäisches Patentamt

European Patent Office

Office européen des brevets

(19)

(11) Veröffentlichungsnummer : **0 133 500**
**B1**

(12) EUROPÄISCHE PATENTSCHRIFT

(45) Veröffentlichungstag der Patentschrift :
25.05.88

(51) Int. Cl.⁴ : **G 08 C 15/06**

(21) Anmeldenummer : 84108590.5

(22) Anmeldetag : 20.07.84

(54) Zeitmultiplexverfahren für ein Fernbedienungssystem für elektrische und elektronische Geräte.

(30) Priorität : 08.08.83 DE 3328558

(43) Veröffentlichungstag der Anmeldung :
27.02.85 Patentblatt 85/09

(45) Bekanntmachung des Hinweises auf die Patenterteilung : 25.05.88 Patentblatt 88/21

(84) Benannte Vertragsstaaten :
AT BE CH DE FR GB IT LI LU NL SE

(56) Entgegenhaltungen :
EP-A- 0 075 317
EP-A- 0 129 794
DE-A- 2 305 874
FUNKSCHAU, Nr. 13, Juni 1984, Seiten 51,52, München, DE; R. AUER: "Im Dialog"

(73) Patentinhaber : TELEFUNKEN Fernseh und Rundfunk
GmbH
Göttinger Chaussee 76
D-3000 Hannover 91 (DE)

(72) Erfinder : Platte, Hans-Joachim, Dr.
Königsberger Weg 22
D-3005 Hemmingen 4 (DE)
Erfinder : Voessing, Walter, Dipl.-Ing.
Am Weingarten 14
D-3015 Wennigsen (DE)
Erfinder : Oberjatzas, Günter, Dipl.-Ing.
Gollstrasse 64
D-3000 Hannover 73 (DE)

(74) Vertreter : Einsel, Robert, Dipl.-Ing.
TELEFUNKEN Fernseh und Rundfunk GmbH Göttinger Chaussee 76
D-3000 Hannover 91 (DE)

## Beschreibung

Geräte der Unterhaltungselektronik im häuslichen Bereich wie z. B. Farbfernsehempfänger, Videorecorder und HiFi-Anlagen können bekanntlich mit Fernbedienungseinheiten betätigt werden, die Steuersignale über einen gerichteten drahtlosen Kanal z. B. mit Infrarot oder Ultraschall zu dem zu steuernden Gerät übertragen. Derartige Fernbedienungssysteme im häuslichen Bereich können auch auf andere Geräte wie z. B. Elektroherde, Backofen und Heizungsanlagen erweitert werden.

Es wurde auch vorgeschlagen (EP-A-0 129 794 Veröffentlicht am 02.01.85), bei einem derartigen Fernbedienungssystem jeweils das Gerät mit einem zweiten Sender und die Fernbedieneinheit mit einem diesem Sender zugeordneten zweiten Empfänger zu versehen, der nur bei Empfang eines vorbestimmten Bereitschaftssignals des zweiten Senders die Fernbedieneinheit und die Steuerung des Gerätes aktiviert. Dadurch wird die Handhabung einer derartigen Fernbedieneinheit in dem Sinne vereinfacht, daß der Bedienende die Funktionsfähigkeit der Fernbedienung besser erkennen kann.

Wenn in einem Raum mehrere Fernbedieneinheiten mit mehreren Geräten kommunizieren, so sind Fehlbedienungen und Funktionsstörungen möglich. Bei gleichzeitigem Senden von zwei oder mehr Fernbedieneinheiten ist eine Decodierung der gesendeten Befehle im Gerät nicht mehr möglich. Es kann auch zu einer falschen Decodierung und somit zu einer falschen Steuerung des Gerätes kommen. Andererseits besteht der Bedarf, insbesondere bei einer größeren Zahl von Geräten und einer größeren Personenzahl mehrere Fernbedieneinheiten vorzusehen, die möglichst gleichberechtigt Zugriff zu allen Geräten haben.

Für die Kommunikation zwischen mehreren Fernbedieneinheiten und mehreren Geräten ist es bekannt (DE-A-2 304 874), zwischen den Fernbedieneinheiten und den Geräten eine Vielzahl von bidirektionalen Kanälen zur Übertragung von Kennungs- und Befehlssignalen vorzusehen und den Kanälen im Zeitmultiplex zeitlich aufeinanderfolgende, sich periodisch wiederholende Zeitabschnitte zuzuordnen. Dadurch wird erreicht, daß die Kommunikationswege zwischen den Fernbedieneinheiten und den Geräten zeitlich nacheinander wirksam sind und daher einander nicht stören können.

Der Erfindung liegt die Aufgabe zugrunde, bei einem derartigen Verfahren die Dauer und den Abstand der den Geräten zugeordneten Zeitabschnitte zu bestimmen, ohne daß dafür in den Geräten untereinander synchronisierte Taktgeber erforderlich sind.

Diese Aufgabe wird durch die im Anspruch 1 beschriebene Erfindung gelöst. Vorteilhafte Weiterbildungen der Erfindung sind in den Unteransprüchen beschrieben.

Es ist auch bekannt (EP-A-0 075 317), zwischen jeweils einer Fernbedieneinheit und einem elektrischen Gerät einen bidirektionalen Kanal für die Übertragung von Information vorzusehen. Dort wird jedoch die Aufgabe, mit mehreren Fernbedieneinheiten wahlweise mehrere Geräte zu bedienen, nicht behandelt.

Die erfindungsgemäße Lösung beruht auf der zulässigen Annahme, daß Geräte für ein Verfahren der beschriebenen Art im häuslichen Bereich ständig an die Netzspannung angeschlossen sind. Das gesamte Fernbedienungssystem organisiert den Aufbau des Zeitmultiplexsystems in Abhängigkeit von der Anzahl der kommunizierenden Geräte selbsttätig durch eine die Geräte abfragende Steuerschaltung, die vorzugsweise durch eine Fernbedieneinheit gebildet oder in dieser enthalten ist. Bei einer während des Betriebes auftretenden Störung wird diese Störung durch die Steuerschaltung erkannt und der genannte Aufbau des Multiplexsystems neu organisiert. Diese Neuorganisation erfolgt auch dann, wenn z. B. sich ein weiteres Gerät in die Zahl der kommunizierenden Geräte einreiht. Die Neuorganisation läuft ohne Zutun des Benutzers und ohne merkliche Zeitverzögerung ab.

Die Erfindung wird anhand der Zeichnung näher erläutert. Darin zeigen

Fig. 1 im Prinzip das Zusammenwirken zwischen den Fernbedieneinheiten und den Geräten,

Fig. 2 den Aufbau der von den Geräten und den Fernbedieneinheiten gesendeten Signale,

Fig. 3 ein Diagramm zur Erläuterung der Organisation des Zeitmultiplexsystems und

Fig. 4 ein Flußdiagramm für die Wirkungsweise des Senders in der Fernbedieneinheit beim Aufbau des Zeitmultiplexsystems.

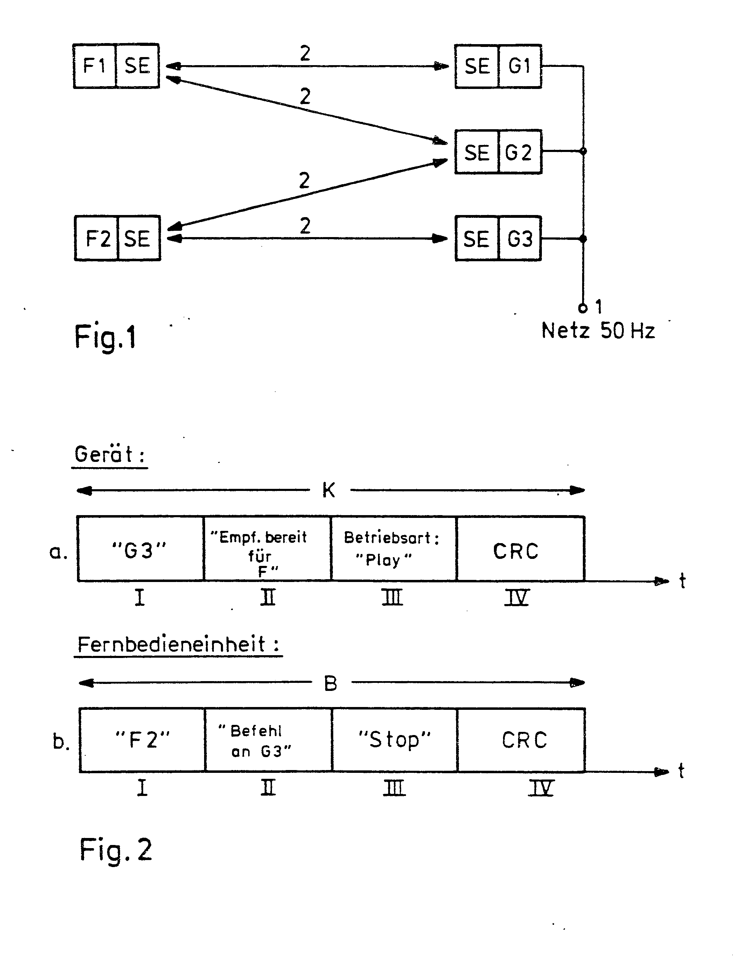

Fig. 1 zeigt drei Geräte G1,G2,G3, die zur Stromversorgung und zur Synchronisierung des Zeitmultiplexsystems an die Netzklemme 1 mit einer Netzfrequenz von 50 Hz angeschlossen sind. Die Geräte G sind mit zwei Fernbedieneinheiten F1,F2 steuerbar. Alle Geräte G und alle Fernbedieneinheiten F enthalten eine Sendeund Empfangsteil SE, wodurch zwischen den Fernbedieneinheiten F und den Geräten G die bidirektionalen Kanäle 2 geschaffen werden. Über diese Kanäle kann das Gerät G Kennungssignale oder Bereitschaftssignale an eine Fernbedieneinheit F und eine Fernbedieneinheit F Befehlssignale an ein Gerät G senden. Diese Art der Kommunikation zwischen den Geräten und den Fernbedieneinheiten ist näher beschrieben in EP-A-0 129 794. In Fig. 1 kann aufgrund der Richtcharakteristik der drahtlosen Übertragung nicht jede Fernbedieneinheit F mit allen Geräten kommunizieren und umgekehrt. Die Geräte G « sehen » einander ebensowenig wie die Fernbedieneinheiten F.

Fig. 2a zeigt den Aufbau eines Kennungssignales, das jeweils von einem Gerät G an eine Fernbedieneinheit F gesendet wird. Das Signal besteht aus vier aufeinander folgenden Abschnitten I-IV, die folgende Information beinhalten:

Zeitabschnitt I mit der Kennungs-Nummer des Gerätes, z. B. der Information « Ich bin ein Videorecorder » oder « Ich bin das Gerät Nr. 6 ».

Zeitabschnitt II mit dem Zustand des Gerätes, z. B. « Ich bin bereit zum Empfang von Befehlssignalen einer beliebigen Fernbedieneinheit ».

Zeitabschnitt III über die momentane Betriebsart des Gerätes, z. B. « Ich bin in Betriebsart Aufnahme ».

Zeitabschnitt IV mit einem Fehlererkennungs- und Sicherungssignal oder Kontrollwort CRC (cyclic redundancy check). An diesem Signal ist feststellbar, ob das gesamte Kennungssignal gemäß Fig. 2a fehlerfrei zum Empfänger in der Fernbedieneinheit F übertragen worden ist.

Fig. 2b zeigt den Aufbau eines Befehlssignals B, das von einer Fernbedieneinheit F zu einem Gerät G gesendet wird. Dieses Befehlssignal hat ebenfalls vier aufeinander folgende Zeitabschnitte I-IV, die folgende Informationen beinhalten :

Zeitabschnitt I mit einer Kennung für die Fernbedieneinheit, z. B. « Ich bin Fernbedienung Nr. 2 ».

Zeitabschnitt II mit einer Kennung der Nummer desjenigen Gerätes, das von der Fernbedieneinheit angesprochen und gesteuert werden soll, z. B. « Befehl an alle Geräte » oder « Befehl an Gerät Nr. 3 ».

Zeitabschnitt III mit dem eigentlichen Befehl z. B. « Stop ».

Zeitabschnitt IV wiederum mit einem CRC-Fehlererkennungs- und Sicherungssignal gemäß Fig. 2a.

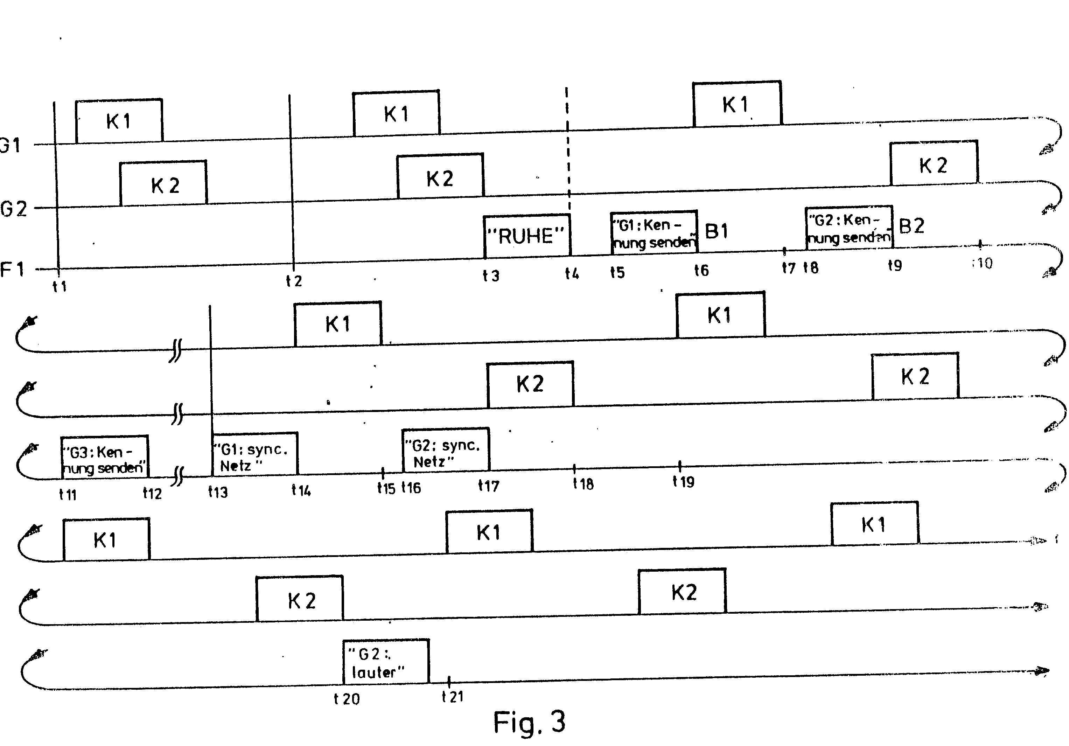

Fig. 3 zeigt den Aufbau und die Organisation des Zeitmultiplexsystems für das Zusammenwirken zwischen der Fernbedieneinheit F1 und den beiden Geräten G1,G2. Im Zeitpunkt t1 wird das System aus G1,G2 eingeschaltet. Die beiden Geräte G1,G2 senden jetzt Kennungssignale K1,K2, die wegen noch nicht vorhandener Synchronisierung einander zeitlich überlappen können. Im Zeitpunkt t2 werden die Fernbedieneinheiten eingeschaltet. Durch die teilweise zeitliche Überlappung der Kennungssignale K1,K2 hat das insgesamt empfangene Kennungssignal eine zu große Dauer, während außerdem mit sehr großer Wahrscheinlichkeit durch diese Überlappung das CRC-Wort ein ungültiges Kennungssignal anzeigt. Im Zeitpunkt t3 gibt daher die Fernbedieneinheit F1 an alle Geräte G den Befehl, die Sendung von Kennungssignalen einzustellen, d. h. den Befehl « An alle Geräte, Ruhe auf dem Kanal ». Ab Zeitpunkt t4 senden daher die Sender der Geräte G ohne weiteres keine Kennungssignale K mehr aus. Anschließend sendet die Fernbedieneinheit F1 entsprechend einem vorhandenen Adressen-Register Befehlssignale B an die einzelnen Geräte, und zwar von t5-t6 das Befehlssignal B1 « An Gerät G1 : bitte Kennung senden ». Nach Ablauf dieses Signales sendet das Gerät G1 von t6-t7 sein Kennungssignal K1, das den Aufbau gemäß Fig. 2a hat. Diese Informationen aus dem Kennungssignal K1 werden in der Fernbedieneinheit F1 gespeichert. Wenn aufgrund eines Befehlssignales B mit einer bestimmten Adresse kein Gerät G reagiert, erfolgt entsprechend keine Speicherung, da dann ein Gerät mit dieser Adresse nicht vorhanden ist, nicht eingeschaltet ist oder nicht im Wirkungsbereich der Fernbedieneinheit F1 liegt. Von t8-t9 sendet die Fernbedieneinheit F1 ein zweites Befehlssignal B2 mit dem Inhalt « An Gerät 2 : bitte Kennung senden ». Von t9-t10 sendet das Gerät G2 sein Kennungssignal K2 mit dem Aufbau gemäß Fig. 2a, das entsprechend in der Fernbedieneinheit F1 gespeichert wird. Von t11-t12 wird ein weiteres Gerät G3 angesprochen, das z. B. nicht vorhanden ist und somit kein Kennungssignal K sendet. Von t2-t13 werden somit alle mit der Fernbedieneinheit F1 kommunizierfähigen Geräte G in der Fernbedieneinheit F1 mit ihren Adressen gemäß Fig. 2a gespeichert.

Im Zeitpunkt t13 beginnt das Einrasten der Geräte auf die Netzperiode, d. h. die Festlegung der Zeiträume für die zeitsequentielle Übertragung der einzelnen Signale. Von t13-t14 sendet die Fernbedieneinheit F1 an das Gerät G1 den Befehl, sich auf die Netzfrequenz mit der Wiederholdauer T zu synchronisieren. Für die Kommunikation zwischen dem Gerät G1 und der Fernbedieneinheit F1 wird jetzt ein bestimmter Zeitabschnitt in zeitlicher Lage und. Zeitdauer festgelegt. Das Gerät G1 sendet jetzt wiederum das Kennungssignal K1 gemäß Fig. 2a von t14-t15. Dieses Kennungssignal K1 wird erst mit der Wiederholungsdauer T des Zeitmultiplexsystems wiederholt ausgesendet. Diese Wiederholungsdauer T beträgt

$$T = \text{Netzperiodendauer} \cdot n/k, \text{ wobei}$$

$n$ = der Anzahl der insgesamt mit der Fernbedieneinheit F kommunizierenden Geräte G und $k$ der Anteil an der Dauer einer Netzperiode für die jeweilige Kommunikation zwischen den Geräten G und den Fernbedieneinheiten F über die Kanäle 2 ist. Wenn die Zahl $n$ der Geräte = 8 ist und jeweils für die Kommunikation 1/4 der Netzperiode benötigt wird, so beträgt die Wiederholungsdauer für die Sendung der Kennungssignale K1 und ebenso K2 usw. = 40 ms.

Von t16-t17 sendet die Fernbedieneinheit F1 entsprechend ein Befehlssignal an das Gerät G2, sich wie das Gerät G1 auf das Netz zu synchronisieren, daraufhin sendet das Gerät G2 von t17-t18 das Kennungssignal K2, das sich ebenfalls mit der Zeitdauer T wiederholt.

Ab t19 senden die Geräte G1,G2 ... also jetzt zeitlich versetzt und mit Zwischenräumen ihre Kennungssignale K1,K2 ... aus. In den Zwischenräumen können die Befehlssignale von den Fernbedieneinheiten F zu den Geräten G zur Steuerung dieser Geräte auf unterschiedliche Funktionen gesendet werden. So sendet z. B. von t20-t21 eine Fernbedieneinheit F ein Befehlssignal B zum Gerät G2 mit dem Befehl « lauter », so daß bei dem Gerät die Wiedergabelautstärke erhöht wird.

Der Zeitrahmen für das Zeitmultiplexsystem wird in einem Rechner der Fernbedieneinheit F1 ermittelt. Dafür sind im Zeitpunkt t13 alle Werte vorhanden, unter anderem die Zahl der insgesamt kommunizierenden Geräte G. Die Informationen für das Zeitmultiplexsystem werden an alle Geräte G gesendet und von diesen quittiert. Wenn danach alle Geräte G in den Rahmen des Zeitmultiplexsystems eingerastet sind, kann der normale Betrieb zwischen den Fernbedieneinheiten und den Geräten beginnen. Eine neu hinzukommende Fernbedieneinheit F orientiert sich durch Abhören der Kennungssignale K von den Geräten an die Situation im Raum und reiht sich in das Zeitmultiplexsystem ein. Wenn dieses nicht ohne weiteres möglich oder die Übertragung der Kennungssignale k gestört ist, leitet diese Fernbedieneinheit den beschriebenen Synchronisiervorgang gemäß Fig. 3 erneut ein.

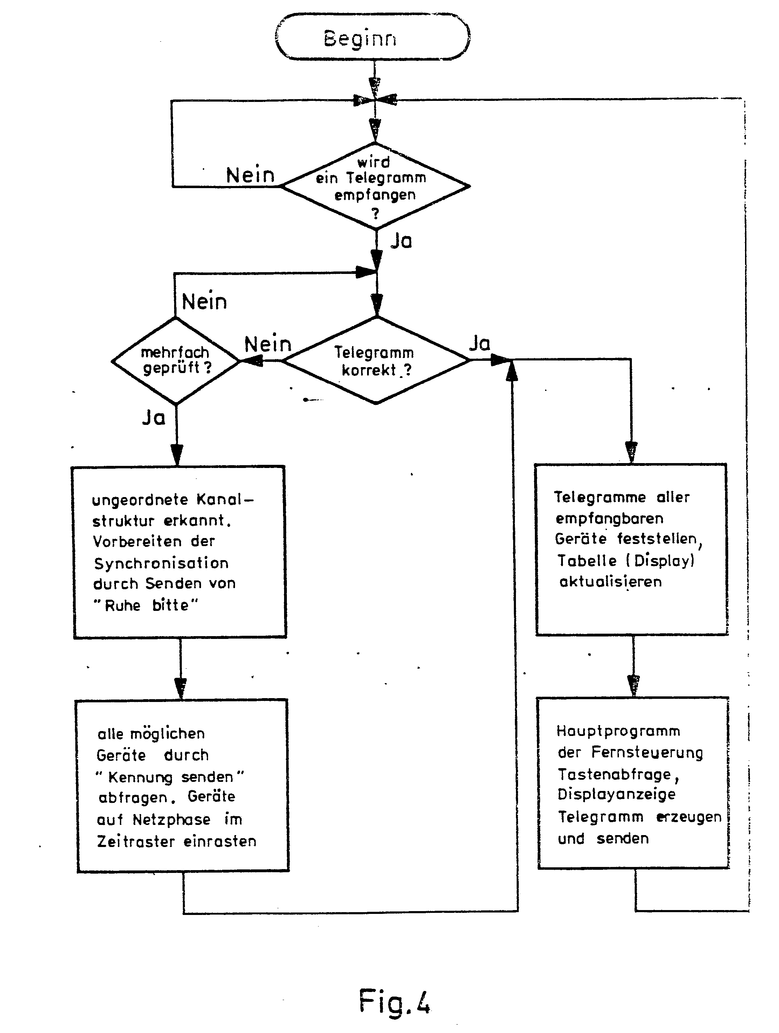

Fig. 4 zeigt das Flußdiagramm für die beschriebene Funktion des Senders in einer Fernbedieneinheit F für die Organisation des Systems gemäß Fig. 3.

## Patentansprüche

1. Zeitmultiplexverfahren für ein Fernbedienungssystem für elektrische und elektronische Geräte (G), insbesondere der Unterhaltungselektronik, bei dem zwischen mehreren Fernbedieneinheiten (F) und mehreren Geräten (G) eine Vielzahl von bidirektionalen Kanälen (2) zur Übertragung von Kennungs- und Befehlsignalen (K, B) besteht und den Kanälen (2) im Zeitmultiplex zeitlich aufeinanderfolgende, sich periodisch wiederholende Zeitabschnitte (t13 - t15 ; t16 - 18) zugeordnet sind, dadurch gekennzeichnet, daß jeweils die Dauer und der Abstand der Zeitabschnitte durch regelmäßig wiederholtes Zählen einer festgelegten Anzahl von Perioden der Netzspannung bestimmt sind.

2. Verfahren nach Anspruch 1, dadurch gekennzeichnet, daß jeder Zeitabschnitt so lang bemessen ist, daß während seiner Dauer sowohl ein Kennungssignal (K) von einem Gerät (G) zu einer Fernbedieneinheit (F) als auch ein Befehlssignal (B) von einer Fernbedieneinheit (F) zu einem Gerät (G) übertragen werden kann.

3. Verfahren nach Anspruch 1, dadurch gekennzeichnet, daß eine Fernbedieneinheit (F) ein Befehlssignal (B) an ein bestimmtes Gerät (G) nur in solchen Zeitabschnitten sendet, in denen die Fernbedieneinheit (F) das Kennungssignal (K) des bestimmten Gerätes (G) empfängt.

4. Verfahren nach Anspruch 1, dadurch gekennzeichnet, daß jedes Kennungs- oder Befehlssignal (K,B) ein zur Prüfung der fehlerfreien Übertragung dieses Signals dienendes Fehlererkennungswort (CRC-Wort) enthält.

5. Verfahren nach Anspruch 1, dadurch gekennzeichnet, daß die Geräte (G) in ihrem Kennungssignal (K) unterschiedliche, das jeweilige Gerät (G) und seinen Typ kennzeichnende Identifizierungssignale (I) aussenden.

6. Verfahren nach Anspruch 5, dadurch gekennzeichnet, daß ein vom Gerät (G) zur Fernbedieneinheit (F) übertragenes Kennungssignal (K) zeitlich nacheinander Informationen über die Identifizierung des Gerätes (G), seine Empfangsbereitschaft hinsichtlich der Fernbedieneinheiten (F) und seinen derzeitigen Betriebszustand sowie ein abschließendes Kontrollwort (CRC) enthält.

7. Verfahren nach Anspruch 1, dadurch gekennzeichnet, daß ein Gerät (G) bei vorgenommener Einstellung einer bestimmten Funktion durch eine bestimmte Fernbedieneinheit (F) für die Dauer dieser Funktion gegen Bedienung durch eine andere Fernbedieneinheit (F) gesperrt ist.

8. Verfahren nach Anspruch 1, dadurch gekennzeichnet, daß die Fernbedieneinheiten (F) in ihren Befehlssignalen (B) unterschiedliche, die jeweilige Fernbedieneinheit (F) kennzeichnende Identifizierungssignale aussenden.

9. Verfahren nach Anspruch 8, dadurch gekennzeichnet, daß ein von einer Fernbedieneinheit (F) gesendetes Befehlssignal (B) zeitlich nacheinander Informationen über die Identifizierung der Fernbedieneinheit (F), über das Gerät (G), dem dieses Befehlssignal (B) gilt, den Befehl selbst und ein abschließendes Kontrollwort (CRC) enthält.

10. Verfahren nach Anspruch 1, dadurch gekennzeichnet, daß eine Steuerschaltung (F1) zur Erfassung aller vorhandenen und komunizierenden Geräte (G) und Zuordnung der Zeitabschnitte zu den einzelnen Kanälen (2) vorgesehen ist.

11. Verfahren nach Anspruch 10, dadurch gekennzeichnet, daß durch die Steuerschaltung (F1) die absolute zeitliche Lage des Zeitmultiplex-Ablaufs festgelegt wird.

12. Verfahren nach Anspruch 10, dadurch gekennzeichnet, daß die Information über die Anzahl der regelmäßig wiederkehrend von den Geräten (G) abzuzählenden Perioden der Netzspannung durch die Steuerschaltung (F1) an alle Geräte (G) übertragen wird.

13. Verfahren nach Anspruch 10, dadurch gekennzeichnet, daß die Steuerschaltung durch eine der Fernbedieneinheiten (F1) gebildet ist.

14. Verfahren nach Anspruch 10, dadurch gekennzeichnet, daß die Steuerschaltung bei Ermittlung einer zeitlich ungeordneten oder gestörten Sendung der Kennungssignale (K) der Geräte (G) zunächst die Sendung bei allen Geräten (G) abschaltet und anschließend entsprechend vorgegebener Adressen nacheinander Befehlssignale (B) an die einzelnen Geräte (G) sendet, aufgrund derer das jeweils angesprochene Gerät (G) sein Kennungssignal (K) an die Steuerschaltung sendet.

15. Verfahren nach Anspruch 14, dadurch gekennzeichnet, daß nach Speicherung der Adressen der korrespondierenden Geräte (G) in der Steuerschaltung von der Steuerschaltung entsprechend dem Zeitmultiplex zeitlich nacheinander Befehlssignale (B) an die Geräte (G) gesendet werden, sich auf das Netz zu synchronisieren, und daß danach die Geräte (G) ihre Kennungssignale (K1,K2) entsprechend dem Zeitmultiplex nacheinander aussenden.

16. Verfahren nach Anspruch 14 oder 15, dadurch gekennzeichnet, daß bei einer während des Betriebes auftretenden Störung in der Sendung der Kennungssignale (K) die Vorgänge automatisch erneut eingeleitet werden.

## Claims

1. A time multiplex method for a remote-control system for electrical and electronic devices (G), in particular home entertainment electronic equipment, incorporating a number of bi-directional channels (2) between a number of remote-control units (F) and devices (G) for the transmission of identification and instruction signals (K, B), there being associated with these channels (2) time intervals (t13 - t15 ; t16 - 18) which are periodically repeating in the time sequence of a time-multiplex system, characterized in that the spacing and length of these intervals are determined by regular repeated counting of a fixed number of mains voltage periods.

2. A method as claimed in claim 1, characterized in that the length of each time interval is calculated so that within its duration an identification signal (K) can be transmitted from a device (G) to a remote-control unit (F), and also an instruction signal (B) can be transmitted from a remote-control unit (F) to a device (G).

3. A method as claimed in claim 1, characterized in that a remote-control unit (F) transmits an instruction signal (B) to a particular device (G) only during the intervals in which the remote-control unit (F) receives the identification signal (K) of the particular device (G).

4. A method as claimed in claim 1, characterized in that each identification or instruction signal (K,B) contains an error-detecting (CRC) word which checks the correct transmission of the said signal.

5. A method as claimed in claim 1, characterized in that the devices (G) transmit in their identification signal (K) different identifying signals (I) which can identify the device (G) and its type.

6. A method as claimed in claim 5, characterized in that the identification signal (K) which is transmitted from a device (G) to a remote-control unit (F) contains serial information on the identity of the device (G), on its ready-to-receive state visa-vis the remote-control units (F) and on its current operational state, along with a closing check word (CRC).

7. A method as claimed in claim 1, characterized in that a device (G), when is is set for a specific function, is blocked by a specific remote-control unit (F) from being operated by any other remote-control unit (F) for the duration of the function.

8. A method as claimed in claim 1, characterized in that the remote-control units (F) transmit in their instruction signals (B) different identifying signals which recognize the remote-control unit (F) in question.

9. A method as claimed in claim 1, characterized in that the instruction signal (B) which is sent by a remote-control unit (F) contains serial information on the identification of the remote-control unit (F), on the device (G) to which this instruction signal (B) relates, on the instruction itself, and also a closing check word (CRC).

10. A method as claimed in claim 1, characterized in that a control circuit (F1) is provided for logging all current communicating devices (G) and for assigning the time intervals to the individual channels (2).

11. A method as claimed in claim 10, characterized in that the control circuit (F1) fixes the absolute time positioning of the time multiplex sequence.

12. A method as claimed in claim 10, characterized in that the information on the number of regularly-repeating periods of the mains voltage that are to be counted by the devices (G) is transmitted to all the devices (G) by the control circuit (F1).

13. A method as claimed in claim 10, characterized in that the control circuit is formed by one of the remote-control units (F1).

14. A method as claimed in claim 10, characterized in that if the identification signals (K) of the devices (G) are disturbed or are not correctly timed then the control circuit will cut off the transmission of all devices (G) and then send instruction signals (B) successively to the various devices (G) according to pre-defined addresses, so that the device (G) that is queried sends its identification signal (K) to the control circuit.

15. A method as claimed in claim 14, characterized in that, after the addresses of the intercommunicating devices (G) are stored in the control circuit the control circuit then sends time-sequential instruction signals (B) to the devices (G) in accordance with the time multiplex, so that they synchronize themselves to the power supply, and that thereupon the devices (G) send out their identification signals (K1,K2) successively in accordance with the time multiplex.

16. A method as claimed in claim 14 or 15, characterized in that if there is an operational disturbance in the transmission of the identification signals (K) the cyclic sequence will be automatically initiated once more.

## Revendications

1. Procédé de multiplexage temporel pour un système de télécommande pour des appareils électriques et électroniques (G), notamment de l'électronique du spectacle, et selon lequel entre plusieurs unités de télécommande (F) et plusieurs appareils (G) il existe une multiplicité de canaux bidirectionnels (2) pour la transmission de signaux indicatifs et de signaux de commande (K,B), et des intervalles de temps (t13-t15 ; t16-18), qui se succèdent dans le temps et se répètent périodiquement lors du multiplexage temporel, sont associés aux canaux (2), caractérisé en ce que la durée des intervalles de temps et leur écart réciproque sont déterminés par un comptage, répété régulièrement, d'un nombre fixé de périodes de la tension du réseau.

2. Procédé selon la revendication 1, caractérisé en ce que chaque intervalle de temps est dimensionné avec une durée suffisamment longue pour que, pendant cette dernière, aussi bien un signal indicatif (K) puisse être transmis d'un appareil (G) à une unité de télécommande (F) et qu'un signal de commande (B) puisse être transmis d'une unité de télécommande (F) à un appareil (G).

3. Procédé selon la revendication 1, caractérisé en ce qu'une unité de télécommande (F) envoie un signal de commande (B) à un appareil déterminé (G) uniquement pendant des intervalles de temps, pendant lesquels l'unité de télécommande (F) reçoit le signal indicatif (K) de l'appareil déterminé (G).

4. Procédé selon la revendication 1, caractérisé en ce que chaque signal indicatif ou chaque signal de commande (K,B) contient un mot d'identification d'erreur (mot CRC) servant à contrôler la transmission sans erreur de ce signal.

5. Procédé selon la revendication 1, caractérisé en ce que les appareils (G) émettent, dans leur signal indicatif (K), différents signaux d'identification (I) caractérisant l'appareil respectif (G) et son type.

6. Procédé selon la revendication 5, caractérisé en ce qu'un signal indicatif (K) transmis par l'appareil (G) à l'unité de télécommande (F) contient des informations qui se succèdent dans le temps et concerne l'identification de l'appareil (G), son état prêt à la réception en rapport avec les unités de télécommande (F) et son état actuel de fonctionnement ainsi qu'un mot de commande de fin (CRC).

7. Procédé selon la revendication 1, caractérisé en ce que, lors de l'exécution du réglage d'une fonction déterminée par une unité déterminée de télécommande (F), un appareil (G) est bloqué pendant la durée de cette fonction vis-à-vis d'une commande exécutée par une autre unité de télécommande (F).

8. Procédé selon la revendication 1, caractérisé en ce que les unités de télécommande (F) émettent, dans leurs signaux de commande (B), différents signaux d'identification caractérisant l'unité de télécommande respective (F).

9. Procédé selon la revendication 8, caractérisé en ce qu'un signal de commande (B) émis par une unité de télécommande (F) contient des informations qui se succèdent dans le temps et concernent l'identification de l'unité de télécommande (F), l'appareil (G) pour lequel ce signal de commande (B) est valable, la commande elle-même et un mot terminal de commande (CRC).

10. Procédé selon la revendication 1, caractérisé en ce qu'il est prévu un circuit de commande (F1) servant à recenser tous les appareils (G) présents et en communication et l'association des intervalles de temps aux différents canaux (2).

11. Procédé selon la revendication 10, caractérisé en ce que la position temporelle absolue du cycle de multiplexage temporel est déterminée par le circuit de commande (F1).

12. Procédé selon la revendication 10, caractérisé en ce que les informations concernant le nombre des périodes de la tension du réseau, qui sont comptées régulièrement de façon répétitive par les appareils (G), est transmis par le circuit de commande (F1) à tous les appareils (G).

13. Procédé selon la revendication 10, caractérisé en ce que le circuit de commande est formé par l'une des unités de télécommande (F).

14. Procédé selon la revendication 10, caractérisé en ce que lors de la détermination d'une émission non correcte dans le temps ou perturbée des signaux indicatifs (K) de l'appareil (G), l'émission est tout d'abord interrompue dans tous les appareils (G), puis des signaux de commande (B) sont envoyés successivement, conformément à des adresses prédéterminées, aux différents appareils (G), signaux sur la base desquels l'appareil respectivement concerné (G) envoie son signal indicatif (K) au circuit de commande.

15. Procédé selon la revendication 14, caractérisé en ce qu'après la mémorisation des adresses des appareils correspondants (G) dans le circuit de commande, des signaux de commande (B) sont envoyés successivement par le circuit de commande et conformément au multiplexage temporel aux appareils (G), pour les synchroniser sur le réseau, et qu'ensuite les appareils (G) envoient leurs signaux indicatifs (K1,K2) successivement conformément au multiplexage temporel.

16. Procédé selon la revendication 14 ou 15, caractérisé en ce que, dans le cas d'une perturbation apparaissant pendant le fonctionnement lors de l'émission des signaux indicatifs (K), les processus sont à nouveau déclenchés de façon automatique.

Fig.1

Gerät:

| "G3" | "Empf. bereit für F" | Betriebsart: "Play" | CRC |
|:---:|:---:|:---:|:---:|
| I | II | III | IV |

a.

Fernbedieneinheit:

| "F2" | "Befehl an G3" | "Stop" | CRC |
|:---:|:---:|:---:|:---:|
| I | II | III | IV |

b.

Fig. 2

Fig. 3

Fig.4